# EUROPEAN PATENT APPLICATION

(11) **EP 4 102 631 A2**
(43) Date of publication of application: **14.12.2022**
(21) Application number: 22174881.7
(22) Date of filing: 23.05.2022
(51) Int. Cl.: H01M 50/209, H01M 50/242, H01M 50/293, H01M 50/505

(54) **BATTERY PACK**

(30) Priority: 24.05.2021 KR 20210066488
(71) Applicant: Samsung SDI Co., Ltd., Yongin-si, Gyeonggi-do 17084 (KR)
(72) Inventor: PARK, Insoo, 17084 Yongin-si (KR)
(74) Representative: Walaski, Jan Filip

(57) **Abstract**

Provided is a battery pack. The battery pack includes: a plurality of battery cells each including a terminal surface on which a terminal is formed; a bus bar formed on the terminal surface of each of the plurality of battery cells and configured to electrically connect different battery cells, the bus bar including a first surface facing the terminal surface, and a second surface opposite to the first surface; and a cover resin layer formed on the first and second surfaces of the bus bar and configured to embed the bus bar therein. A thin and lightweight battery pack may be provided, and a battery pack may be provided, in which components may be protected against vibrations or impacts applied to the battery pack and electrical connections or physical couplings between the components may be protected.

## Description

### BACKGROUND

### 1. Field

One or more embodiments relate to a battery pack.

### 2. Description of the Related Art

In general, secondary batteries refer to batteries that can be repeatedly charged and recharged unlike non-rechargeable primary batteries. Secondary batteries are used as energy sources of devices such as mobile devices, electric vehicles, hybrid vehicles, electric bicycles, or uninterruptible power supplies. Secondary batteries are individually used or secondary battery modules (battery packs) each including a plurality of secondary batteries connected as one unit are used according to the types of external devices using secondary batteries.

### SUMMARY

According to an embodiment, a function as a bus bar holder for position fixation and insulation of a bus bar and a function as a cover forming an outer surface of a battery pack are realized together through first and second cover resin layers coupled to face each other with the bus bar that electrically connects a plurality of battery cells therebetween, and thus, a thin and lightweight battery pack may be provided, and a battery pack may be included, in which components may be protected against from vibrations or impacts applied to the battery pack and electrical connections or physical couplings between the components may be protected.

Additional aspects will be set forth in part in the description which follows and, in part, will be apparent from the description, or may be learned by practice of the presented embodiments of the disclosure.

In order to solve the above technical problem and other technical problems, a battery pack includes a plurality of battery cells each including a terminal surface on which a terminal is formed, a bus bar formed on the terminal surface of each of the plurality of battery cells and configured to electrically connect different battery cells, the bus bar including a first surface facing the terminal surface, and a second surface opposite to the first surface, and a cover resin layer formed on the first and second surfaces of the bus bar and configured to embed the bus bar therein.

For example, the cover resin layer may include a first cover resin layer and a second cover resin layer respectively formed on the first and second surfaces of the bus bar.

For example, the battery pack may include a connection wire electrically connected to the bus bar and arranged on a first plane with the bus bar.

For example, the connection wire may be formed at a position not overlapping the bus bar.

For example, the connection wire may be between bus bars of a first row and a second row, the bus bars being formed on the terminal surfaces of the plurality of battery cells.

For example, the bus bars of the first and the second rows may be formed on the terminal surfaces of the plurality of battery cells corresponding to a first terminal position and a second terminal position.

For example, the bus bars of the first and second rows may be arranged at the first and second terminal positions spaced apart from each other in a second direction crossing a first direction in which the plurality of battery cells are arranged.

For example, the connection wire may be formed corresponding to vent portions formed at a central position between the first and second terminal positions in the second direction.

For example, the connection wire may extend from a front end to a rear end of the battery pack in a first direction in which the plurality of battery cells are arranged, the connection wire being formed to a position not overlapping a cross bus bar arranged at the rear end of the battery pack.

For example, the connection wire may be arranged at a central position on the first plane in a second direction crossing a first direction in which the plurality of battery cells are arranged, and the bus bar may be arranged at an edge position on the first plane in the second direction.

For example, the cover resin layer may include a first cover resin layer and a second cover resin layer respectively arranged under and over the first plane, and an insulating sheet may be between the second cover resin layer and the connection wire.

For example, the insulating sheet may be between a third opening and the connection wire, the third opening being formed in the second cover resin layer, and a width of the insulating sheet may be greater than a width of the flexible wire and is greater than a width of the third opening.

For example, the first cover resin layer may include a pair of first opening formed at a first terminal position and a second terminal position of each of the plurality of battery cells.

For example, the first opening may include a pair of first openings spaced apart from each other in a second direction corresponding to the first and second terminal positions.

For example, the pair of first openings may be formed at an edge position in the second direction corresponding to the first and second terminal positions.

For example, the pair of first openings may be intermittently, or discontinuously, formed in a first direction corresponding to the first and second terminal positions.

For example, the first cover resin layer may further include a second opening formed at a central position between the pair of first openings, the pair of first openings being formed at an edge position in the second direction.

For example, the first cover resin layer may be formed by curing a first application line to a fourth application line consecutively formed in a first direction with the pair of first openings and the second opening therebetween, wherein the plurality of battery cells are arranged in the first direction.

For example, the second opening may be formed at a position corresponding to vent portions of the plurality of the battery cells.

For example, the second cover resin layer may include a third opening formed at a position corresponding to the second opening.

For example, the second and third openings may be consecutively formed in a first direction in which the plurality of battery cells are arranged.

For example, the second cover resin layer may be formed by curing a fifth application line and a sixth application line consecutively formed in a first direction with the third opening therebetween, wherein the plurality of battery cells are arranged in the first direction.

For example, the fifth application line may be formed on a first application line and a second application line formed with one of the pair of first openings therebetween, and the sixth application line may be formed on a third application line and a fourth application line formed with another of the pair of first openings therebetween.

For example, the bus bar may be embedded by the cover resin layer between a first surface of the first cover resin layer and a second surface of the second cover resin layer, and the bus bar may be coupled to a first terminal and a second terminal formed on the terminal surfaces of the plurality of battery cells through a coupling portion exposed through a first opening of the first cover resin layer.

For example, the bus bar may include a plurality of bus bars arranged in a first direction in which the plurality of battery cells are arranged, and the first and second cover resin layers may be consecutively connected to each other through a space between the plurality of bus bars adjacent to each other.

For example, the bus bar may include a first bus bar and a second bus bar, which are arranged in different orientations in a second direction and are adjacent to each other in a first direction, and the first and second cover resin layers may be consecutively connected to each other through a space between the first and second bus bars adjacent to each other.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is an exploded perspective view illustrating a battery pack according to an embodiment;
FIG. 2 is a perspective view for describing an electrical connection of a plurality of battery cells shown in FIG. 1;
FIG. 3 is a cross-sectional view of the battery pack taken along a line III-III of FIG. 1;
FIG. 4 is a plan view of the battery pack shown in FIG. 1, illustrating a plan view taken from top of an insulating sheet;
FIG. 5 is a plan view of the battery pack shown in FIG. 1, illustrating a plan view taken from top of an m plane;
FIG. 6 is a plan view of the battery pack shown in FIG. 1, illustrating a plan view taken from top of a first cover resin layer; and
FIG. 7 is an exploded perspective view for describing physical bonding of the battery pack shown in FIG. 1.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

A battery pack will now be described according to embodiments with reference to the accompanying drawings.

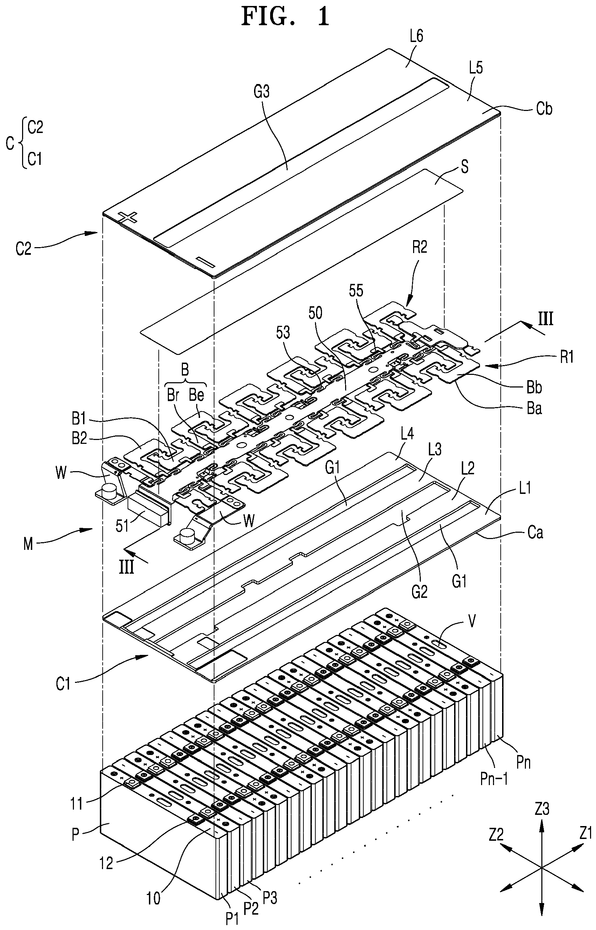

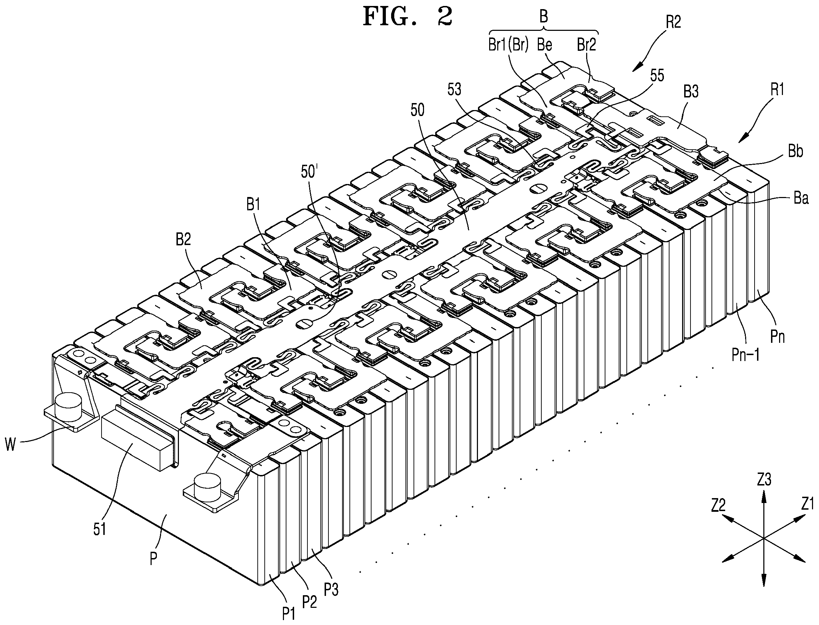

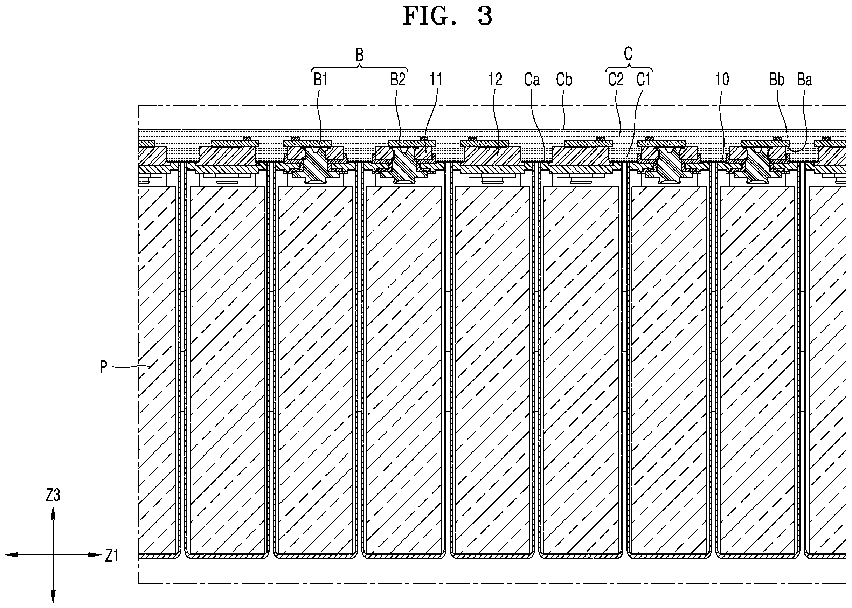

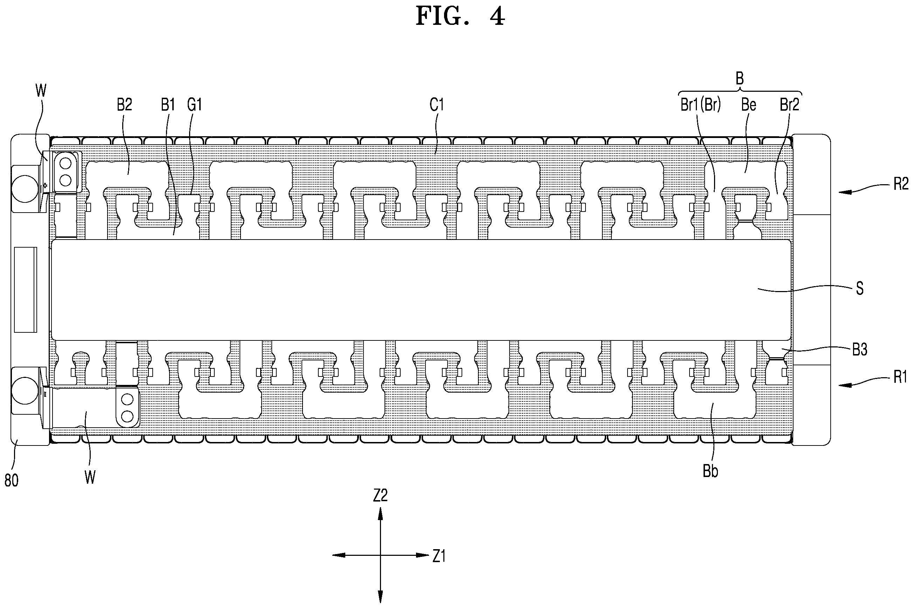

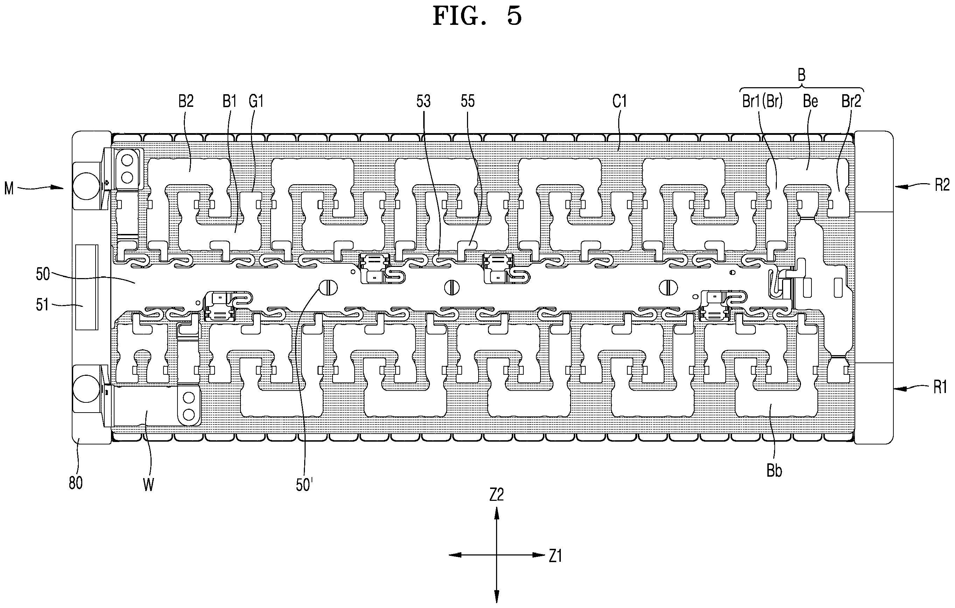

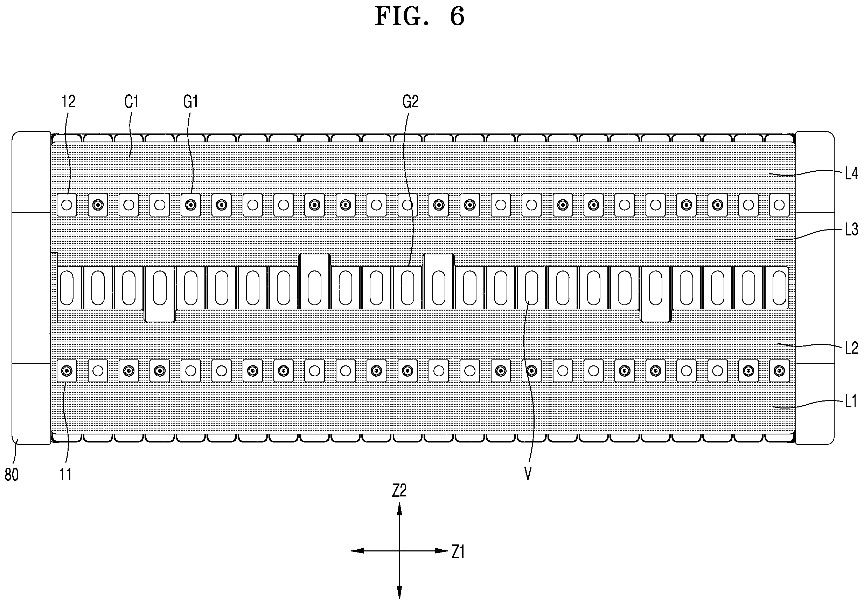

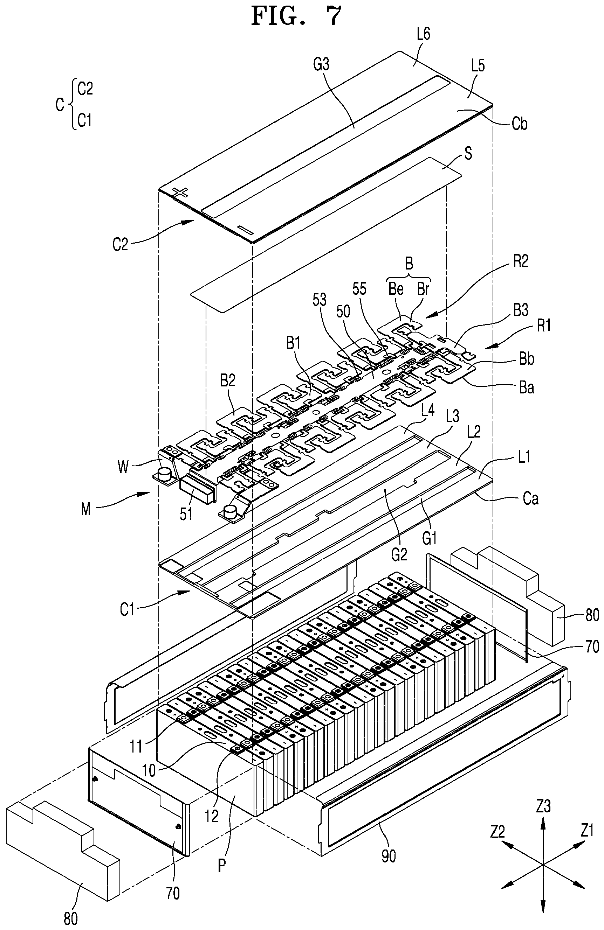

FIG. 1 is an exploded perspective view illustrating a battery pack according to an embodiment. FIG. 2 is a perspective view for describing an electrical connection of a plurality of battery cells shown in FIG. 1. FIG. 3 is a cross-sectional view of the battery pack taken along a line III-III of FIG. 1. FIG. 4 is a plan view of the battery pack shown in FIG. 1, illustrating a plan view taken from top of an insulating sheet. FIG. 5 is a plan view of the battery pack shown in FIG. 1, illustrating a plan view taken from top of an m plane. FIG. 6 is a plan view of the battery pack shown in FIG. 1, illustrating a plan view taken from top of a first cover resin layer. FIG. 7 is an exploded perspective view for describing physical bonding of the battery pack shown in FIG. 1.

Referring to the drawings, according to an embodiment, the battery pack includes a plurality of battery cells P each including a terminal surface 10 on which a terminal 11 and a terminal 12 are formed, a bus bar B formed on the terminal surface of each of the plurality of cells P and configured to electrically connect different battery cells P, the bus bar B including a first surface Ba facing the terminal surface, and a second surface Bb opposite to the first surface Ba, and a cover resin layer C formed on the first and second surfaces Ba and Bb of the bus bar B to embed the bus bar B therein.

Referring to FIGS. 1 and 2, the battery cells P may include a plurality of battery cells P arranged in a first direction Z1, and each of the battery cells P may include a terminal surface 10 including a first terminal 11 and a second terminal 12 arranged in a second direction Z2. In this case, the second direction Z2 may correspond to a direction crossing the first direction Z1 in which the battery cells P are arranged. According to an embodiment, the second direction Z2 may refer to a direction in which the first and second terminals 11 and 12 are arranged on the terminal surface 10, and may correspond to, for example, a direction perpendicular to the first direction Z1. According to an embodiment, the terminal surface 10 may correspond to an upper surface of the battery cell P in a third direction Z3, and the third direction Z3 may be a direction crossing the first and second directions Z1 and Z2. According to an embodiment, the third direction Z3 may correspond to a direction perpendicular to the first and second directions Z1 and Z2.

The plurality of battery cells P arranged in the first direction Z1 may be electrically connected to each other through bus bars B connected to first and second terminals 11 and 12 formed on terminal surfaces 10 of the battery cells P. According to an embodiment, the bus bar B may electrically connect, to each other, non-adjacent battery cells P in the first direction Z1 in which the battery cells P are arranged. The bus bar B may include a connection portion Be extending between the non-adjacent battery cells P in the first direction Z1 in which the battery cells P are arranged, and a branch portion Br protruding in the second direction Z2 from each of both ends of the connection portion Be.

The branch portion Br may include a first branch portion Br1 and a second branch portion Br2, which respectively protrude in the second direction Z2 from one end and the other end of the connection portion Be in the first direction Z1, and are connected to terminals 11 and 12 of each of the non-adjacent battery cells P. According to an embodiment, the bus bar B may include a first bus bar B1 and a second bus bar B2 which are arranged in different orientations, and the first and second bus bars B1 and B2 maybe arranged to be engaged with each other. For example, according to an embodiment, when the first and second bus bars B1 and B2 are arranged to be engaged with each other, it may mean that the first and second bus bars B1 and B2 may be arranged to be engaged with each other so that at least portions (branch portions Br) of the first and second bus bars B1 and B2 are accommodated in concave recesses of opposite second and first bus bars B2 and B1, that is, in concave recesses between branch portions Br on both sides of the opposite second and first bus bars B2 and B1. According to an embodiment, the first and second bus bars B1 and B2 may have different orientations depending on whether one of a connection portion Be and a branch portion Br of each bus bar B is arranged relatively close to a central position of the battery pack in the second direction Z2 and the other thereof is arranged relatively close to an edge position of the battery pack in the second direction Z2.

According to an embodiment, the central position may refer to a central position of a width of a battery cell P in the second direction Z2, and the edge position may refer to a position on one side or a position on the other side with respect to the central position of the width of the battery cell P in the second direction Z2. For example, according to an embodiment, a vent portion V may be arranged at the central position of the width of the battery cell P and a position adjacent to the central position, and the first and second terminals 11 and 12 of the battery cell P may be arranged at an edge position of the width of the battery cell P.

According to an embodiment, one of the connection portion Be and the branch portion Br of the bus bar B may be relatively arranged at the central position rather than the edge position, and the other thereof may be relatively arranged at the edge position rather than the central position. In more detail, in the first bus bar B1, a connection portion Be maybe relatively arranged at the central position, and a branch portion Br may be relatively arranged at the edge position. On the contrary, in the second bus bar B2, a branch portion Br may be relatively arranged at the central position, and a connection portion Be may be relatively arranged at the edge position. As described above, the first and second bus bars B1 and B2 may be arranged in opposite orientations in the second direction Z2. The first and second bus bars B1 and B2 may be arranged in a manner that the branch portions Br of the first and second bus bars B1 and B2 are engaged with each other at positions opposite to each other in the second direction Z2. The first and second bus bars Bi and B2 may be arranged in rows in the first direction Z1 in a manner that the branch portions Br thereof are engaged with each other, and may be arranged in a first row Ri and a second row R2, which are different from each other, in the second direction Z2 in which the first and second terminals 11 and 12 of the battery cell P are arranged.

The bus bar B may substantially extend in the first direction Z1 or may be arranged in the first direction Z1 to connect terminals 11 and 12 of different battery cells P arranged at the same positions of the terminals 11 and 12 in the second direction Z2. In this case, non-adjacent battery cells P to be connected may be arranged in opposite orientations in the second direction Z2, and the bus bar B may connect the non-adjacent battery cells P with opposite polarities in series with each other. Accordingly, the battery cells P may be arranged in opposite orientations in units each including two battery cells P. However, according to an embodiment, depending on the type of electrical connection of the battery cells P, such as a series, parallel, or combined series-parallel connection, two battery cells P adjacent to each other in the first direction Z1 may not be arranged in opposite orientations as a unit, but for example, four adjacent battery cells P may be arranged in opposite orientations as a unit. According to various embodiments, regarding the number of series-connected battery cells P and the number of parallel-connected battery cells P, series, parallel, or combined series-parallel electrical connections of various numbers of battery cells P may be formed according to a required electrical capacity or output. Accordingly, a battery pack having various capacities and outputs may be provided.

According to an embodiment, a first battery cell Pi and a second battery cell P2 arranged at a front end of the battery pack in the first direction Z1 may be connected in series with adjacent battery cells P, and the first and second battery cells P1 and P2 may be arranged in opposite orientations. In addition, an (n-1)th battery cell Pn-i and an n-th battery cell Pn arranged at a rear end of the battery pack in the first direction Z1 may also be connected in series with adjacent battery cells P. The (n-1)th and n-th battery cells Pn-i and Pn may be connected by a cross bus bar B3 substantially extending in the second direction Z2 and may be arranged in the same orientation. The cross bus bar B3 connects different battery cells P and may correspond to the bus bar B. According to an embodiment, the bus bar B may include bus bars B of the first and second rows R1 and R2 which do not transversely extend between a position of the first terminal 11 and a position of the second terminal 12 in the second direction Z2, but rather substantially extend in the first direction Z1, and the cross bus bar B3 substantially extending in the second direction Z2 between the position of the first terminal 11 and the position of the second terminal 12, unlike the bus bars B of the first and second rows Ri and R2. According to an embodiment, the cross bus bar B3 may substantially extend in a diagonal direction to simultaneously follow the first and second directions Z1 and Z2. In this case, a length of the cross bus bar B3 extending in the second direction Z2 may be relatively greater than a length of the cross bus bar B3 extending in the first direction Z1, and accordingly, it may be described that the cross bus bar B3 substantially extends in the second direction Z2.

According to an embodiment, the battery pack may overall include a plurality of battery cells P connected in series with each other, wherein non-adjacent battery cells P arranged in the first direction Z1 are connected in series with each other. For example, according to an embodiment, an electrical connection may be formed, in which non-adjacent battery cells P to be connected are arranged in opposite orientations and, overall, the plurality of battery cells P arranged in the first direction Z1 are connected in series with each other. However, throughout the present specification, the electrical connection as described above is an example according to an embodiment. According to various embodiments, in addition to the above electrical connection, the battery pack may overall include, for example, in order to connect adjacent battery cells P in series with each other, a series connection between the plurality of battery cells P arranged in the first direction Z1, wherein adjacent battery cells P to be connected through the bus bar B are arranged in opposite orientations, or may overall include, in order to connect adjacent battery cells P in parallel to each other, a parallel connection between the plurality of battery cells P arranged in the first direction Z1, wherein adjacent battery cells P to be connected through the bus bar B are arranged in the same orientation. Also, according to an embodiment, the battery pack may include a combined series-parallel electrical connection including series and parallel connections of the plurality of battery cells P arranged in the first direction Z1. For example, the battery pack may include series and parallel connections together, which include a parallel connection between adjacent battery cells P and a series connection between non-adjacent battery cells P. In this case, battery cells P adjacent to each other in the first direction Z1 may be arranged in the same orientation, and non-adjacent battery cells P arranged in the first direction Z1 may be arranged in opposite orientations. As described above, the parallel connection between the adjacent battery cells P and the series connection between the non-adjacent battery cells P may be formed through one bus bar. For example, one bus bar B connects adjacent battery cells P with the same polarity in parallel to each other and simultaneously connects non-adjacent battery cells P with opposite polarities in series with each other, such that the parallel connection between the adjacent battery cells P and the series connection between the non-adjacent battery cells P may be simultaneously formed through one bus bar. Accordingly, a plurality of bus bars B simultaneously forming series and parallel connections are arranged in the first direction Z1, and thus, a combined series-parallel battery pack including series and parallel connections between the plurality of battery cells P arranged in the first direction Z1 may be provided.

According to various embodiments, the battery pack may include a parallel connection between the adjacent battery cells P and an electrical connection in which a parallel-connected battery cell P is connected in series with another parallel-connected battery cell P. In this case, the battery pack may include a combined series-parallel electrical connection including both a series connection and a parallel connection. In this regard, the parallel connection between the adjacent battery cells P and a series connection between the parallel-connected battery cell P and the other parallel-connected battery cell P at a position where the parallel-connected battery cells P are adjacent to each other may be formed, and a plurality of bus bars B that respectively form a parallel connection and a series connection may be arranged in the first direction Z1. Accordingly, the combined series-parallel electrical connection including both the parallel connection and the series connection may be formed.

The bus bars B may be arranged in the first and second rows R1 and R2 corresponding to the terminals 11 and 12 in the second direction Z2, and a connection wire 50 (also referred to as a connection element, or elongate connection element, or connection strip) may be between the bus bars B of the first and second rows Ri and R2. For example, the connection wire 50 may be between the bus bars B of the first and second rows R1 and R2 on an m plane M (corresponding to a first plane in the claims) formed by the first and second directions Z1 and Z2. According to an embodiment, the connection wire 50 and the bus bar B may be arranged together on the m plane M. In this case, the m plane M may refer to a virtual plane formed at a specific level in the third direction Z3. The connection wire 50 and the bus bar B may not be arranged at the same level according to a difference in thickness but rather may be arranged at substantially the same level based on an average thickness, that is, on the same level at substantially the same height in the third direction Z3. As will be described below, the connection wire 50 and the bus bar B may be connected to each other on the m plane M, and as will be described below, the connection wire 50 and the bus bar B may be connected to each other through a voltage transmission portion 55 therebetween and may be arranged together on the m plane M. As will be described below, a first cover resin layer C1 and a second cover resin layer C2 may be formed over and under the m plane M on which the connection wire 50 and the bus bar B are arranged. In other words, the connection element extends between and in the same direction as first and second bus bars B1, B2.

A position and size of the connection wire 50 may be limited by the bus bar B arranged on the m plane M with the connection wire 50. In more detail, the connection wire 50 may be formed with a width less than a width between the bus bars B of the first and second rows R1 and R2 in the second direction Z2, and may extend from the front end to the rear end in the first direction Z1 and may be formed to a length not to reach the cross bus bar B3 arranged at the rear end. According to an embodiment, the connection wire 50 may be formed at a position not overlapping the bus bar B and may be formed between the bus bars B of the first and second rows R1 and R2 to a position where the connection wire 50 does not interfere with the cross bus bar B3. For example, the connection wire 50 may include one end seated on an end block 80 arranged on the outside at the front end in an arrangement of the battery cells P in the first direction Z1, and the other end formed at a position that does not reach the cross bus bar B3 arranged at the rear end. In this case, a connector 51 may be formed at one end seated on the end block 80, and state information regarding the battery cells P may be output through the connector 51 of the connection wire 50. According to an embodiment, a circuit board (not shown) may be arranged on one side of the battery pack, the connection wire 50 may be connected to the circuit board (not shown) through the connector 51, and the circuit board (not shown) may obtain the state information regarding the battery cells P through the connector 51. According to various embodiments, the circuit board (not shown) may be provided on one side of the battery pack or may also be connected to a plurality of battery packs together.

The connection wire 50 may be arranged at the central position in the second direction Z2. For example, the connection wire 50 may be arranged at the central position between the bus bars B of the first and second rows R1 and R2 arranged at the edge position in the second direction Z2. According to an embodiment, a vent portion V may be formed at the central position in the second direction Z2, and the connection wire 50 may be formed at the central position overlapping the vent portion V in the second direction Z2. The vent portion V is provided to alleviate internal pressure of the battery cell P, and high-temperature and high-pressure gas accumulated inside the battery cell P may be discharged through the vent portion V. The connection wire 50 may extend along the central position where the vent portion V is formed in the first direction Z1, and may extend across a vent portion V of each of the battery cells P. In this case, vent holes 50' may be formed in a plurality of positions overlapping the vent portion V along a length of the connection wire 50 parallel to the first direction Z1. According to an embodiment, the vent holes 50' may be formed at all positions overlapping the vent portion V in the first direction Z1 or may be formed only at some positions overlapping the vent portion V in the first direction Z1. According to an embodiment, the vent holes 50' may be formed at some positions overlapping the vent portion V in the first direction Z1 and may include a plurality of vent holes 50' spaced apart from each other in the first direction Z1. As described above, even though the vent holes 50' are formed only at some positions overlapping the vent portion V in the first direction Z1, high-temperature and high-pressure gas discharged from each vent portion V may be discharged to the outside through the vent holes 50'. As will be described below, the first and second cover resin layers C1 and C2 may be formed under and over the m plane M on which the connection wire 50 and the bus bar B are arranged. In this case, a second opening G2 and a third opening G3 may be formed at central positions of the first and second cover resin layers C1 and C2 in the second direction Z2. The second and third openings G2 and G3 formed at the central positions of the first and second cover resin layers C1 and C2 may be formed to penetrate through a thickness of the first and second cover resin layers C1 and C2 so that high-temperature and high-pressure gas discharged from the vent portion V formed at the central position is not blocked. Technical descriptions regarding the first and second cover resin layers C1 and C2 will be provided below in more detail.

According to an embodiment, the bus bars B may form a charge-discharge path of the battery cells P, and the connection wire 50 may form an obtainment path of the state information regarding the battery cells P. The bus bars B may be connected to each other and may form the charge-discharge path of the battery cells P, and an input/output wire W may be connected to a first battery cell Pi forming the front end and a third battery call P3 forming the rear end according to an electrical connection order in the arrangement of the battery cells P in the first direction Z1. The input/output wire W may form the charge-discharge path of the battery cells P between the battery cells P and an external device (not shown). According to an embodiment, the input/output wire W is connected to the first and third battery cells P1 and P3 arranged at the front end according to a physical arrangement order in the first direction Z1. However, according to an embodiment, the input/output wire W may also be connected to different battery cells P arranged at the front and rear ends according to the physical arrangement order in the first direction Z1. That is, according to an embodiment, the input/output wire W to and from which a charge-discharge current of the plurality of battery cells P arranged in the first direction Z1 are input and output may be concentrated on a front end side of the battery pack in the first direction Z1. However, according to various embodiments, the input/output wire W may be dispersed on front and rear end sides of the battery pack in the first direction Z1.

According to an embodiment, in the connection of the battery cells P, the connection may be formed from the front end to the rear end by connecting, to each other, non-adjacent battery cells P in the first direction Z1 from the first battery cell Pi at the front end to an n-th battery cell Pn at the rear end in the first direction Z1, and then, the non-adjacent battery cells P may be connected to each other from the rear end to the front end through the cross bus bar B3 connected to the n-th battery cell Pn arranged at the rear end. According to an embodiment, after the first and second battery cells P1 and P2 adjacent to each other at a front end position are connected to each other, even-numbered battery cells P not adjacent to each other, such as a second, fourth, sixth, ..., n-th battery cell Pn, may be connected to each other from the front end to the rear end. After the n-th and (n-1)th battery cells Pn and Pn-i adjacent to each other at a rear end position are connected to each other, odd-numbered battery cells P not adjacent to each other, such as an (n-1)th and (n-3)th battery cell P, may be connected to each other from the rear end to the front end.

According to an embodiment, in the physical arrangement, the plurality of battery cells P are arranged from the front end to the rear end in the first direction Z1, but in the electrical connection order, the first battery cell Pi may form the front end, and the third battery call P3 may form the rear end, and in the electrical connection order, the input/output wire W may be connected to the first and third battery cells P1 and P3 respectively forming the front and rear ends.

The connection wire 50 is provided to obtain state information regarding the battery cells P. For example, state information, such as voltage information and temperature information regarding the battery cells P, may be obtained through the connection wire 50. According to an embodiment, the connection wire 50 may obtain voltage information regarding the battery cells P through the bus bars B connected to the battery cells P. In more detail, a voltage transmission portion 55 may be connected to the connection wire 50, and the voltage transmission portion 55 may include one end connected to the connection wire 50, and the other end connected to the bus bar B. The voltage transmission portion 55 may include one end connected to an input port 53, and the other end connected to the bus bar B, the input port 53 protruding in a bent shape from a main body of the connection wire 50. In this case, the voltage transmission portion 55 may be connected to the connection wire 50 arranged at the central position, and the connection portion Be or the branch portion Br of the bus bar B relatively close to the central position. In more detail, the voltage transmission portion 55 may be connected to a connection portion Be of the first bus bar B1 and a branch portion Br of the second bus bar B2, which are formed relatively close to the central position. For connection with the voltage transmission portion 55, among branch portions Br of the second bus bar B2, a branch portion Br at one end may extend in the first direction Z1 relatively long toward the central position or the main body of the connection wire 50 arranged at the central position and may extend longer than a branch portion Br at the other end.

According to an embodiment, in the second bus bar B2, the branch portion Br at one end may be formed in the first direction Z1 relatively longer than the branch portion Br at the other end and may be formed in an asymmetrical shape overall. The second bus bar B2 may be formed in an asymmetrical shape in which the branch portions Br at one end and the other end protrude at different lengths in the second direction Z2, and unlike the second bus bar B2, the first bus bar B1 may be formed in a symmetrical shape.

According to an embodiment, the first and second bus bars B1 and B2 may be formed in a symmetrical shape and an asymmetrical shape, respectively, depending on lengths of branch portions Br formed at one end and the other end of the connection portions Be, and the first and second bus bars B1 and B2 formed in different shapes may be assembled in a manner that the first and second bus bars B1 and B2 are engaged with each other in a direction facing each other in the second direction Z2. In this case, the branch portion Br of the second bus bar B2 extending relatively long may be assembled to the outside of the first bus bar B1 and may extend toward the connection wire 50 through the outside of the first bus bar B1, and the branch portion Br of the second bus bar B2 extending relatively short may be arranged inside the first bus bar B1, that is, in a concave recess of the first bus bar B1.

According to an embodiment, the first and second bus bars B1 and B2 may be formed in a symmetrical shape and an asymmetrical shape, respectively, but according to various embodiments, the first and second bus bars B1 and B2 may all be formed in a symmetrical shape. For example, the first and second bus bars B1 and B2 may all be formed in a symmetrical shape, and the second bus bar B2 arranged at a relatively outward position may be electrically connected to the connection wire 50 through a wire (not shown) connected to one side of the second bus bar B2. However, according to an embodiment, the second bus bar B2 is not connected to the connection wire 50 through the wire (not shown), but rather, for example, the second bus bar B2 arranged at the relatively outward position is arranged in an asymmetrical shape, such that the second bus bar B2 may be connected to the connection wire 50 through the branch portion Br extending relatively long. In this case, the connection between the second bus bar B2 and the connection wire 50 through the wire (not shown) may be omitted.

The bus bar B may be arranged on the terminal surface 10 of the battery cell P and may include the first surface Ba facing the terminal surface 10 and the second surface Bb opposite to the first surface Ba. The first and second surfaces Ba and Bb of the bus bar B may correspond to opposite surfaces of the bus bar B in the third direction Z3. As will be described below, the bus bar B may be embedded by the cover resin layer C. The cover resin layer C may include a first cover resin layer C1 formed on the first surface Ba of the bus bar B and a second cover resin layer C2 formed on the second surface Bb of the bus bar B. The bus bar B may be embedded between a first surface Ca forming an outer surface of the first cover resin layer C1 or a lower surface of the first cover resin layer C1, and a second surface Cb forming an outer surface of the second cover resin layer C2 or an upper surface of the second cover resin layer C2. In other words, the bus bar B may be embedded between the first surface Ca of the first cover resin layer C1 and the second surface Cb of the second cover resin layer C2. For example, according to an embodiment, the first and second surfaces Ca and Cb forming the outer surfaces of the first and second cover resin layers C1 and C2 may refer to external surfaces facing the outside opposite to the bus bar B among both sides of the first and second cover resin layers C1 and C2.

In other words, according to an embodiment, the first and second surfaces Ca and Cb of the cover resin layer C may respectively correspond to the lower surface of the first cover resin layer C1 forming a lower portion of the cover resin layer C in the third direction Z3 and the upper surface of the second cover resin layer C2 forming an upper portion of the cover resin layer C in the third direction Z3. In this case, the bus bar B may be embedded between the first and second surfaces Ca and Cb forming an outer surface of the cover resin layer C, that is, an outer surface of the cover resin layer C opposite to the bus bar B.

Throughout the present specification, when the cover resin layer C is formed on the first surface Ba of the bus bar B, it may mean that the cover resin layer C is arranged under the first surface Ba of the bus bar B, and similarly, when the cover resin layer C is formed on the second surface Bb of the bus bar B, it may mean that the cover resin layer C is arranged over the second surface Bb of the bus bar B. According to an embodiment, the cover resin layer C may include the first cover resin layer C1 formed on the first surface Ba of the bus bar B and the second cover resin layer C2 formed on the second surface Bb of the bus bar B. In this case, the first cover resin layer C1 may be arranged under the first surface Ba of the bus bar B and may be between the terminal surface 10 of the battery cell P and the bus bar B. In addition, the second cover resin layer C2 may be arranged over the second surface Bb of the bus bar B.

According to an embodiment, the cover resin layer C may be arranged over and under the m plane M on which the bus bar B and the connection wire 50 are arranged. In more detail, the cover resin layer C may include the first cover resin layer C1 arranged under the m plane M and the second cover resin layer C2 arranged over the m plane M. Throughout the present specification, when the first cover resin layer C1 is formed on the first surface Ba of the bus bar B, it may mean that the first cover resin layer C1 is arranged under the m plane M on which the bus bar B and the connection wire 50 are arranged and is formed to cover the first surface Ba of the bus bar B. Also, throughout the present specification, when the second cover resin layer C2 is formed on the second surface Bb of the bus bar B, it may mean that the second cover resin layer C2 is arranged over the m plane M on which the bus bar B and the connection wire 50 are arranged and is formed to cover the second surface Bb of the bus bar B.

According to an embodiment, the cover resin layer C may be arranged over and under the m plane M and may embed the bus bar B therein. In more detail, the cover resin layer C may be arranged under and over the m plane M on which the bus bar B and the connection wire 50 are arranged, and may embed the bus bar B therein but may not embed the connection wire 50 therein. As will be described below, the cover resin layer C may embed the bus bar B therein at the edge position where the bus bar B is arranged in the second direction Z2, and may expose at least a portion of the connection wire 50 at the central position where the connection wire 50 is arranged. That is, the cover resin layer C may include the second and third openings G2 and G3 at the central position where the vent portion V of the battery cell P is formed, and at least a portion of the connection wire 50 may be exposed through the second and third openings G2 and G3.

According to an embodiment, the bus bar B may be embedded by the cover resin layer C. The cover resin layer C may include the first cover resin layer C1 formed on the first surface Ba of the bus bar B and the second cover resin layer C2 formed on the second surface Bb of the bus bar B. According to an embodiment, the first and second cover resin layers C1 and C2 may respectively refer to the cover resin layer C applied on the first surface Ba of the bus bar B and the cover resin layer C applied on the second surface Bb of the bus bar B. In other words, the first and second cover resin layers C1 and C2 may include the cover resin layers C respectively arranged under and over the m plane M on which the bus bar B and the connection wire 50 are arranged.

According to an embodiment, the first cover resin layer C1 may refer to the cover resin layer C applied on the terminal surface 10 of the battery cell P and may refer to the cover resin layer C between the terminal surface 10 of the battery cell P and the bus bar B. In addition, the second cover resin layer C2 may refer to the cover resin layer C formed on the bus bar B. According to an embodiment, the cover resin layer C may be formed by applying the first cover resin layer C1 on the terminal surface 10 of the battery cell P, arranging the bus bar B and the connection wire 50 on the first cover resin layer C1, and applying the second cover resin layer C2 on the m plane M on which the bus bar B and the connection wire 50 are arranged. The first and second cover resin layers C1 and C2 may not form interfaces discontinuous from each other but may form interfaces consecutively connected to each other (see FIG. 3). According to an embodiment, the first and second cover resin layers C1 and C2 may be applied at different times separated from each other respectively, before and after the arrangement of the bus bar B and the connection wire 50, and the first cover resin layer C1 applied at an earlier time in the process may be fused with the second cover resin layer C2 applied at a later time in the process and may form interfaces consecutively connected to each other. For example, even though the first cover resin layer C1 formed on the terminal surface 10 of the battery cell P is cured over time, the first cover resin layer C1 is melted or semi-melted again according to high temperature of the second cover resin layer C2 applied on the cured first cover resin layer C1, and the first and second cover resin layers C1 and C2 stacked on each other may form consecutively connected interfaces that are not separated from each other.

In other words, according to an embodiment, even though the first and second cover resin layers C1 and C2 are formed at different times respectively, before and after the arrangement of the bus bar B and the connection wire 50, as a result, the first and second cover resin layers C1 and C2 may be consecutively connected to each other to form one cover resin layer C, the bus bar B may be embedded between the first and second surfaces Ca and Cb of the consecutively formed cover resin layer C, and the final cover resin layer C may be formed in a shape in which the first and second cover resin layers C1 and C2 are not separated from each other and are consecutively connected to each other. In addition, the first and second cover resin layers C1 and C2 may be respectively formed on the first and second surfaces Ba and Bb of the bus bar B. The first cover resin layer C1 formed on the first surface Ba of the bus bar B may include the first surface Ca facing the terminal surface 10 of the battery cell P, and the second cover resin layer C2 formed on the second surface Bb of the bus bar B may include the second surface Bb opposite to the terminal surface 10 of the battery cell P. The first and second surfaces Ca and Cb of the first and second cover resin layers C1 and C2 may correspond to upper and lower surfaces of the cover resin layer C in the third direction Z3 among outer surfaces of the cover resin layer C, that is, among outer surfaces opposite to the bus bar B between both surfaces of the cover resin layer C. In more detail, the first surface Ca of the first cover resin layer C1 may correspond to the lower surface of the first cover resin layer C1, and the second surface Cb of the second cover resin layer C2 may correspond to the upper surface of the second cover resin layer C2.

According to an embodiment, the first and second cover resin layers C1 and C2 may be applied under and over the m plane M on which the bus bar B and the connection wire 50 are arranged, and the first and second cover resin layers C1 and C2 respectively applied under and over the m plane M are connected to each other and may embed the bus bar B therein. According to an embodiment, the first and second cover resin layers C1 and C2 may be formed in a liquid or gel phase having fluidity rather than a solid phase having no fluidity and may be applied under and over the m plane M. In this case, when the first and second cover resin layers C1 and C2 have fluidity, it means that it is sufficient for the first and second cover resin layers C1 and C2 to have fluidity when applied under and over the m plane M, and after being applied under and over the m plane M, the first and second cover resin layers C1 and C2 may be cured over time or according to a curing treatment and may exist in a solid phase. According to an embodiment, depending on the fluidity of the first and second cover resin layers C1 and C2, application areas of the first and second cover resin layers C1 and C2 and curing areas of the first and second cover resin layers C1 and C2 may be different from each other. In more detail, the application area of the first cover resin layer C1 may include a first opening G1 consecutively formed in the first direction Z1 corresponding to the positions of the terminals 11 and 12 (see FIGS. 1 and 7). Unlike the application area of the first cover resin layer C1 consecutively formed in the first direction Z1, the curing area of the first cover resin layer C1 may include first openings G1 intermittently formed in the first direction Z1 (see FIGS. 4 to 6). For example, in the drawings attached to the present specification, it may be seen that FIGS. 1 and 7 illustrate the application area of the first cover resin layer C1 formed in a shape in which the first opening G1 is consecutively formed in the first direction Z1, and it may be seen that FIGS. 4 to 6 illustrate the curing area of the first cover resin layer C1 formed in a shape in which the first openings G1 are intermittently, or discontinuously, formed in the first direction Z1.

Throughout the present specification, the first opening G1 of the first cover resin layer C1 may refer to a first opening G1 formed in the application area of the first cover resin layer C1, and the first opening G1 of the cover resin layer C may refer to a first opening G1 formed in the curing area of the first cover resin layer C1. As described above, throughout the present specification, the first cover resin layer C1 and the cover resin layer C may be terms to distinguish states before and after curing is performed, respectively. However, throughout the present specification, depending on positions of the cover resin layer C in a cured state in the third direction Z3, a portion arranged under the m plane M may be referred to as the first cover resin layer C1 and a portion arranged over the m plane M may be referred to as the second cover resin layer C2. The first cover resin layer C1 and the cover resin layer C may be used to distinguish the states before and after curing is performed, or may be used to distinguish a relatively lower portion (corresponding to the first cover resin layer C1) according to a position of the entire cover resin layer C in the third direction Z3.

According to an embodiment, the application area of the first cover resin layer C1 may include the first opening G1 consecutively formed in the first direction Z1 (see FIG. 1), whereas the curing area of the first cover resin layer C1 may include the first openings G1 intermittently formed in the first direction Z1 (see FIGS. 4 to 6). According to an embodiment, the application area of the first cover resin layer C1 may include the first opening G1 consecutively extending across the positions of the terminals 11 and 12 arranged in the first direction Z1 (see FIG. 1). The first cover resin layer C1 having fluidity immediately after application fills a space between the terminals 11 and 12 arranged in the first direction Z1, and the curing area of the first cover resin layer C1 may include the first openings G1 intermittently formed corresponding to the positions of the terminals 11 and 12 arranged in the first direction Z1 (see FIGS. 4 to 6). That is, the first opening G1 consecutively formed in the first direction Z1 in the application area of the first cover resin layer C1 may be partially filled by the fluidity of the first cover resin layer C1 immediately after application, and accordingly, the first openings G1 may be intermittently formed in the first direction Z1, and the curing area of the first cover resin layer C1 including the first openings G1 intermittently formed in the first direction Z1 may be formed.

Referring to FIG. 1, the first opening G1 may include a pair of first openings G1 spaced apart from each other corresponding to the positions of the terminals 11 and 12 spaced apart from each other in the second direction Z2. As will be described below, the first opening G1 is provided to expose the bus bar B from the first cover resin layer C1 and allow connection between the bus bar B exposed from the first cover resin layer C1 and the first and second terminals 11 and 12, and may include a pair of first openings G1 spaced apart from each other in the second direction Z2 corresponding to the positions of the first and second terminals 11 and 12.

The first cover resin layer C1 may include a first application line L1, a second application line L2, a third application line L3, and a fourth application line L4, which are consecutively formed in the first direction Z1 with a pair of first openings G1 therebetween. That is, according to an embodiment, the application area of the first cover resin layer C1 may include first and second application lines L1 and L2 formed with a first opening G1 therebetween, and third and fourth application lines L3 and L4 formed with another first opening G1 therebetween. For example, the first cover resin layer C1 may be formed along the first to fourth application lines L1, L2, L3, and L4, and the first to fourth application lines L1, L2, L3, and L4 may be simultaneously or sequentially formed. As spaces between the first openings G1 consecutively formed in the first direction Z1 between the first to fourth application lines L1, L2, L3, and L4 are filled by the fluidity immediately after application, the curing area of the first cover resin layer C1 including the first openings G1 intermittently formed in the first direction Z1 may be formed (see FIGS. 4 to 6).

According to an embodiment, the first and second application lines L1 and L2 may be formed with the first opening G1 therebetween, the third and fourth application lines L3 and L4 may be formed with the other first opening G1 therebetween, and a second opening G2 may be formed between the second and third application lines L2 and L3. The second opening G2 may be formed along the central position corresponding to the vent portion V formed at the central position in the second direction Z2 and may be consecutively formed in the first direction Z1. In this case, the second opening G2 may be consecutively formed in the first direction Z1 in both the application area and the curing area of the first cover resin layer C1 (see FIGS. 1 and 6), and the second opening G2 may differ from the first opening G1 formed in different shapes, which is consecutively and intermittently formed in the first direction Z1, respectively, in the curing area and the application area of the first cover resin layer C1 (see FIGS. 1 and 6). Hereinafter, differences between the first and second openings G1 and G2 are described.

According to an embodiment, the second cover resin layer C2 may be formed over the first cover resin layer C1, and a third opening G3 may be consecutively formed in the first direction Z1 at a central position of the second cover resin layer C2. The third opening G3 of the second cover resin layer C2 may be formed at a position corresponding to the second opening G2 of the first cover resin layer C1, and the third opening G3 of the second cover resin layer C2 and the second opening G2 of the first cover resin layer C1 may be formed at central positions corresponding to each other. Similar to the second opening G2 of the first cover resin layer C1, the third opening G3 may be consecutively formed in the first direction Z1 in both of the curing area and the application area of the second cover resin layer C2.

According to an embodiment, the second cover resin layer C2 may include a fifth application line L5 and a sixth application line L6, which are consecutively formed in the first direction Z1 with the second opening G2 therebetween. The fifth application line L5 may be formed on the first and second application lines L1 and L2 and may fill a space between the first and second terminals 11 and 12 in a first opening G1 between the first and second application lines L1 and L2, and the sixth application line L6 may be formed on the third and fourth application lines L3 and L4 and may fill a space between the first and second terminals 11 and 12 in another first opening G1 between the third and fourth application lines L3 and L4. In this case, the third opening G3 between the fifth and sixth application lines L5 and L6 and the second opening G2 between the second and third application lines L2 and L3 may be formed at central positions corresponding to each other, and the second and third openings G2 and G3 formed at positions corresponding to each other may not be filled and may expose the vent portion V at the central position. That is, the vent portion V of the battery cell P may be exposed to the outside of the first and second cover resin layers C1 and C2 through the second and third openings G2 and G3 of the first and second cover resin layers C1 and C2, and high-temperature and high-pressure gas may be discharged through the vent portion V.

The application area and the curing area of the first cover resin layer C1 may each include a first opening G1 formed in the terminals 11 and 12 at the edge position in the second direction Z2, and may respectively include a first opening G1 consecutively formed in the first direction Z1, as shown in FIG. 1, and first openings G1 intermittently formed in the first direction Z1, as shown in FIGS. 4 to 6. The first openings G1 may have different shapes in the application area and the curing area of the first cover resin layer C1. Also, the application area and the curing area of the first cover resin layer C1 may each include a second opening G2 formed at the vent portion V at the center in the second direction Z2 and may each include a second opening G2 consecutively formed in the first direction Z1. The second openings G2 may have substantially the same shape in the application area and the curing area of the first cover resin layer C1 (see FIGS. 1 and 6).

The application area and the curing area of the second cover resin layer C2 may each include a third opening G3 formed at the vent portion V at the center in the second direction Z2 and may each include a third opening G3 consecutively formed in the first direction Z1. The third openings G3 may have substantially the same shape in the application area and the curing area of the second cover resin layer C2. The second openings G2 formed in the application area and the curing area of the first cover resin layer C1 may be formed at positions corresponding to the third openings G3 formed in the application area and the curing area of the second cover resin layer C2 and may have substantially the same size as the third openings G3.

According to an embodiment, the first and second openings G1 and G2 of the first cover resin layer C1 may be formed through the first to fourth application lines L1, L2, L3, and L4 spaced apart from each other, and the third openings G3 of the second cover resin layer C2 may be formed through the fifth and sixth application lines L5 and L6 spaced apart from each other. As described above, the first and second openings G1 and G2 of the first cover resin layer C1 and the third openings G3 of the second cover resin layer C2 may be formed at a distance between the first to sixth application lines L1, L2, L3, L4, L5, and L6 spaced apart from each other, and the first to sixth application lines L1, L2, L3, L4, L5, and L6 may be consecutively formed in the first direction Z1 with a distance from each other in the second direction Z2.

Referring to FIG. 1, according to an embodiment, in the curing area of the first cover resin layer C1, the first to fourth application lines L1, L2, L3, and L4 may be connected to each other at one end and the other end positions in the first direction Z1, and similarly, in the curing area of the second cover resin layer C2, the fifth and sixth application lines L5 and L6 may be connected to each other at one end and the other end positions in the first direction Z1.

Throughout the present specification, when the bus bar B is embedded by the cover resin layer C, it may mean that the bus bar B is between the first and second surfaces Ca and Cb of the cover resin layer C in the third direction Z3. According to an embodiment, because the first and second openings G1 and G2 are formed in the first cover resin layer C1 formed on the first surface Ba of the bus bar B, and the third opening G3 is formed in the second cover resin layer C2 formed on the second surface Bb of the bus bar B, portions of the bus bar B may be exposed through the first to third openings G1, G2, and G3. For example, a coupling portion of the bus bar B coupled to the first and second terminals 11 and 12 may be exposed through the first opening G1 formed in the first cover resin layer C1, and the first and second terminals 11 and 12 may be coupled to the bus bar B through the coupling portion of the bus bar B.

According to an embodiment, when the bus bar B is embedded in the cover resin layer C, it does not mean that the first and second surfaces Ba and Bb of the bus bar B is not exposed to the outside of the cover resin layer C, but rather, it may mean that the bus bar B is between the first and second surfaces Ca and Cb of the cover resin layer C in the third direction Z3. In other words, according to an embodiment, the bus bar B is between the first and second surfaces Ca and Cb of the cover resin layer C, but portions of the bus bar B may be exposed through the first to third openings G1, G2, and G3 formed in the cover resin layer C. For example, the coupling portion of the bus bar B coupled to the first and second terminals 11 and 12 may be exposed through the first opening G1. According to various embodiments, a portion of the bus bar B close to the central position may be exposed through the second and third openings G2 and G3 of the cover resin layer C. The second and third openings G2 and G3 of the cover resin layer C are elements to expose the vent portion V of the battery cell P, but as the second and third openings G2 and G3 are formed at the central position to expose the vent portion V, a portion of the bus bar B close to the central position may be exposed. According to an embodiment, the cover resin layer C may be formed by curing the first to sixth application lines L1, L2, L3, L4, L5, and L6 applied in the first direction Z1, and some deviations may occur in formation positions of the second and third openings G2 and G3 depending on the curing of the first to sixth application lines L1, L2, L3, L4, L5, and L6 having fluidity. For example, some deviations may occur in the position and size of the bus bar B exposed by the second and third openings G2 and G3. According to various embodiments, portions of the bus bar B may or may not be exposed through the second and third openings G2 and G3, and the bus bar B may be coupled to the first and second terminals 11 and 12 through the coupling portion of the bus bar B exposed through the first opening G1.

The second cover resin layer C2 is formed over the first cover resin layer C1. According to an embodiment, the fifth and sixth application lines L5 and L6 for forming the second cover resin layer C2 may be formed over the first to fourth application lines L1, L2, L3, and L4 for forming the first cover resin layer C1. In more detail, the fifth application line L5 for forming the second cover resin layer C2 may be formed on the first and second application lines L1 and L2 for forming the first cover resin layer C1, and similarly, the sixth application line L6 for forming the second cover resin layer C2 maybe formed on the third and fourth application lines L3 and L4 for forming the first cover resin layer C1. In this case, in order to protect the connection wire 50 from the fifth and sixth application lines L5 and L6 and insulate the connection wire 50 therefrom, an insulating sheet S may be between the fifth and sixth application lines L5 and L6, that is, between the second cover resin layer C2 and the connection wire 50.

The insulating sheet S may protect the connection wire 50 from the fifth and sixth application lines L5 and L6 for forming the second cover resin layer C2 and may also insulate and protect the connection wire 50 exposed through the third opening G3 between the fifth and sixth application lines L5 and L6. For example, the insulating sheet S may protect the connection wire 50 from the high-temperature fifth and sixth application lines L5 and L6 for forming the second cover resin layer C2 and may insulate and protect the connection wire 50 exposed through the third opening G3 of the second cover resin layer C2 from an external environment.

The insulating sheet S may be formed with a width sufficient to cover the connection wire 50. According to an embodiment, the width of the insulating sheet S may be greater than a width of the connection wire 50. For example, according to various embodiments, the width of the insulating sheet S may be greater than a width of the main body of the connection wire 50 excluding the input port 53. Also, the width of the insulating sheet S may be greater than a width of the third opening G3 formed in the second cover resin layer C2. The insulating sheet S is provided to protect the connection wire 50 exposed through the third opening G3 formed in the second cover resin layer C2, and considering a margin, at least the width of the insulating sheet S may be greater than the width of the third opening G3 formed in the second cover resin layer C2. According to an embodiment, because the width of the third opening G3 formed in the second cover resin layer C2 may be equal to a width of the second opening G2 formed in the first cover resin layer C1, the width of the insulating sheet S may be greater than the width of the second opening G2. According to an embodiment, the second and third openings G2 and G3 formed in the first and second cover resin layers C1 and C2 may be formed with an equal width and may each have a width greater than a width of the first opening G1 formed in the first cover resin layer C1. Because the second and third openings G2 and G3 are provided to expose the vent portion V at the central position and the first opening G1 is provided to expose the terminals 11 and 12 at the edge position, the widths of the second and third openings G2 and G3 may be greater than the width of the first opening G1 considering a width of the vent portion V and widths of the terminals 11 and 12. In this case, the width of the connection wire 50 may be greater than the widths of the first to third openings G1, G2, and G3. In addition, the insulating sheet S is provided to protect the connection wire 50, and thus, considering the margin, the width of the insulating sheet S may be greater than the width of the connection wire 50 or at least the width of the main body of the connection wire 50. Throughout the present specification, a width direction may refer to a dimension in the second direction Z2. For example, the widths of the first to third openings G1, G2, and G3 may refer to widths of the first to third openings G1, G2, and G3 measured in the second direction Z2, and similarly, the width of the insulating sheet S may refer to a width of the insulating sheet S measured in the second direction Z2. In addition, according to an embodiment, the insulating sheet S may include an insulating material having electrical insulation properties and may include an insulating material having thermal insulation properties as well as electrical insulation properties. According to an embodiment, the insulating sheet S may include mica. In addition, according to an embodiment, the cover resin layer C may include, for example, a resin material that may have a difference in fluidity depending on a specific heating state or temperature state, and in a specific embodiment, the cover resin layer C may include a silicone resin.

Regarding a position of the insulating sheet S, the insulating sheet S may be between the connection wire 50 and the second cover resin layer C2 in the third direction Z3. In other words, the insulating sheet S may be formed between the second cover resin layer C2 and the m plane M on which the connection wire 50 and the bus bar B are arranged, and the connection wire 50 and the insulating sheet S may be between the first and second cover resin layers C1 and C2. In this case, the connection wire 50 and the insulating sheet S may be between the second opening G2 of the first cover resin layer C1 and the third opening G3 of the second cover resin layer C2 at the central position in the second direction Z2.

Referring to FIGS. 1 and 3, according to an embodiment, the first and second cover resin layers C1 and C2 may embed the bus bars B therein. For example, the first and second cover resin layers C1 and C2 may be coupled to face each other with the bus bars B therebetween and may fill spaces between adjacent bus bars B. For example, the bus bars B may be arranged over the first to fourth application lines L1, L2, L3, and L4 of the first cover resin layer C1, and as the fifth and sixth application lines L5 and L6 are formed over the first to fourth application lines L1, L2, L3, and L4 over which the bus bars B are arranged, the bus bars B may be between the first and second cover resin layers C1 and C2. In this case, the first and second cover resin layers C1 and C2 may be connected to each other through spaces between adjacent bus bars B and may fill the spaces between the adjacent bus bars B. As the spaces between the adjacent bus bars B are filled by the first and second cover resin layers C1 and C2, insulation between the adjacent bus bars B may be ensured, and as the positions of the bus bars B are more firmly fixed, a short circuit caused by shaking of the bus bars B may be prevented.

According to an embodiment, the position fixation and insulation of the bus bars B are realized by embedding the bus bars B, and thus, this configuration differs from a standardized bus bar holder responsible for position fixation and insulation of bus bars in a comparative example. In more detail, in the comparative example, unlike the cover resin layer C according to an embodiment, which is formed by applying and curing the first to sixth application lines L1, L2, L3, L4, L5, and L6 having fluidity, the bus bars B are assembled on the standardized bus bar holder, and thus, the positions of the bus bars B may be shaken depending on assembly spacings, and as vibrations applied to a battery pack cause repeated impacts, couplings between the bus bars B and first and second terminals 11 and 12 may be damaged.

According to an embodiment, because the cover resin layer C for fixing the positions of the bus bars B and insulating the bus bars B is formed by applying and curing the first to sixth application lines L1, L2, L3, L4, L5, and L6 having fluidity, the cover resin layer C may be firmly attached to the bus bars B, and as the cover resin layer C is firmly attached to the bus bars B, the bus bars B may be fixed in position and insulated. Also, problems, such as shaking caused by the assembly spacings or damage to the couplings between the bus bars B and the first and second terminals 11 and 12 as in the comparative example, may not occur.

According to an embodiment, the cover resin layer C may form a cover corresponding to an upper portion of the battery pack. For example, the second cover resin layer C2 may form an uppermost portion of the battery pack in the third direction Z3 and may provide a cover forming an outer surface of the battery pack at the uppermost portion of the battery pack. In the comparative example, a standardized cover is assembled on the bus bar holder to which the bus bars B are assembled, and accordingly, shaking may occur between components depending on assembly spacings between the bus bars B, the bus bar holder, and the cover, and vibrations applied to the battery pack may damage electrical connections or physical couplings between the components.

According to an embodiment, because the second cover resin layer C2 formed by applying and curing the fifth and sixth application lines L5 and L6 provides a cover of the battery pack, the second cover resin layer C2 providing the cover is closely attached to the first cover resin layer C1 with the bus bars B therebetween, and thus, shaking of the components or damage to the electrical connections or the physical couplings between the components may be prevented. According to an embodiment, a function as the bus bar holder for position fixation and insulation of the bus bar B and a function as the cover forming the outer surface of the battery pack are realized together through the first and second cover resin layers C1 and C2 coupled to face each other with the bus bars B therebetween, and thus, a thin and lightweight battery pack may be provided, the components may be protected against vibrations or impacts applied to the battery pack, and electrical connections or physical couplings between the components may be protected.

Referring to FIG. 3, the cover resin layer C may embed the bus bars B therein, and the bus bars B may be between the first and second surfaces Ca and Cb of the cover resin layer C. Though not shown in the drawings, the first surface Ca of the cover resin layer C is a surface facing the terminal surface 10 of the battery cell P, and the side of the first surface Ca of the cover resin layer C may penetrate into a gap between adjacent terminal surfaces 10 in the first direction Z1 and may include a portion protruding toward a space between the terminal surfaces 10. The first opening G1 formed on the side of the first surface Ca is formed to surround the first and second terminals 11 and 12 of the battery cell P, and overall, the side of the first surface Ca of the cover resin layer C may not have a uniform cross-section in the first direction Z1. For example, the first cover resin layer C1 may include the first opening G1 intermittently formed corresponding to the first and second terminals 11 and 12, and the first cover resin layer C1 may have cross-sections having different shapes in the first direction Z1 depending on the presence of the first opening G1 at positions in which the first and second terminals 11 and 12 are formed and at positions in which the first and second terminals 11 and 12 are not formed. Though not shown in the drawings, the first cover resin layer C1 may include a portion between the terminal surfaces 10, the portion protruding toward a space between the terminal surfaces 10, and the first cover resin layer C1 may have cross-sections having different shapes in the first direction Z1 at a position of the terminal surface 10 and at a position between the terminal surfaces 10. Meanwhile, the second surface Cb of the cover resin layer C is a surface opposite to the terminal surface 10 of the battery cell P, may form the outer surface at the uppermost portion of the battery pack, may include the third opening G3 consecutively formed in the first direction Z1, and may have a uniform cross-section in the first direction Z1.

Hereinafter, physical couplings between a plurality of battery cells P in the battery pack according to an embodiment are described with reference to FIG. 7. That is, referring to FIG. 7, the battery cells P may include the plurality of battery cells P arranged in the first direction Z1 and may include end plates 70 and end blocks 80 arranged on the outside of battery cells P at a front end and a rear end in the first direction Z1. In this case, the end plates 70 and the end blocks 80 may be formed in pairs at both end positions in the first direction Z1, and the end plates 70 arranged as a pair may bind, in the first direction Z1, the plurality of battery cells P arranged in the first direction Z1. The end blocks 80 may provide seating positions in which the connector 51 of the connection wire 50 and output terminals of the input/output wire W are arranged on the outside of the end plate 70, and for example, may provide insulated seating positions for the connector 51 of the connection wire 50 and the output terminals of the input/output wire W.

Together with the end plates 70 arranged at both side positions in the first direction Z1, side plates 90 may be arranged at both side positions in the second direction Z2. The end plates 70 and the side plates 90 are arranged at both side positions in the first direction Z1 and the second direction Z2 of the arrangement of the battery cells P including the plurality of battery cells P and may physically bind the arrangement of the battery cells P. The pair of end plates 70 arranged at both side positions in the first direction Z1 and the pair of side plates 90 arranged at both side positions in the second direction Z2 may be coupled to each other and may be arranged to surround the plurality of battery cells P.

According to the one or more embodiments, a function as a bus bar holder for position fixation and insulation of a bus bar and a function as a cover forming the outer surface of a battery pack are realized together through first and second cover resin layers coupled to face each other with the bus bar that electrically connects a plurality of battery cells therebetween, and thus, a thin and lightweight battery pack may be provided, and a battery pack may be provided, in which components may be protected against from vibrations or impacts applied to the battery pack and electrical connections or physical couplings between the components may be protected.

While embodiments of the present disclosure have been described with reference to the accompanying drawings, the embodiments are for illustrative purposes only, and it will be understood by those of ordinary skill in the art that various modifications and equivalent other embodiments may be made therefrom.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the invention as defined by the following claims.

## Claims

1. A battery pack comprising:
a plurality of battery cells each comprising a terminal surface (10) on which a terminal (11,12) is formed;
a bus bar, B, formed on the terminal surface of each of the plurality of battery cells and configured to electrically connect different battery cells, the bus bar comprising a first surface facing the terminal surface, and a second surface opposite to the first surface; and
a cover resin layer, C, formed on the first and second surfaces of the bus bar and configured to embed the bus bar therein.

2. The battery pack of claim 1, wherein the cover resin layer comprises a first cover resin layer, C1, and a second cover resin layer, C2, respectively formed on the first and second surfaces of the bus bar.

3. The battery pack of claim 1 or 2, further comprising a connection wire, 50, electrically connected to the bus bar and arranged in the same plane as the bus bar, optionally wherein the connection wire does not overlap the bus bar.

4. The battery pack of claim 3, wherein the connection wire is between bus bars B1, B2, of a first row and a second row, the bus bars being formed on the terminal surfaces of the plurality of battery cells at positions corresponding to a first terminal position and a second terminal position.

5. The battery pack of claim 4, wherein the bus bars of the first and second rows are spaced apart from each other in a second direction crossing a first direction in which the plurality of battery cells are arranged.

6. The battery pack of claim 5, wherein the connection wire is formed corresponding to vent portions formed at a central position between the first and second terminal positions in the second direction.

7. The battery pack of claim 4, wherein the connection wire extends from a front end to a rear end of the battery pack in a first direction in which the plurality of battery cells are arranged, the connection wire being formed at a position not overlapping a cross bus bar arranged at the rear end of the battery pack.

8. The battery pack of claim 3 when dependent on claim 2, comprising an insulating sheet, S, between the second cover resin layer, C2, and the connection wire 50.

9. The battery pack of claim 8, wherein the insulating sheet is between the connection wire and an opening, G3, formed in the second cover resin layer, and
the insulating sheet is wider than both the connection wire and the opening, G3.

10. The battery pack of any one of claims 3 to 9 when dependent on claim 2, wherein the first cover resin layer, C1, comprises a pair of first openings, G1, formed at positions respectively corresponding to a first terminal position and a second terminal position of each of the plurality of battery cells, through which the bus bar is coupled to the first terminal and the second terminal.

11. The battery pack of claim 10, wherein the pair of first openings are intermittently formed in a first direction corresponding to the first and second terminal positions.

12. The battery pack of claim 10 or 11, wherein the first cover resin layer further comprises a second opening, G2, formed at a central position between the pair of first openings, the pair of first openings being formed at edge positions in the second direction.

13. The battery pack of claim 12, wherein the first cover resin layer is formed by curing a first application line to a fourth application line consecutively formed in a first direction with the pair of first openings and the second opening therebetween, wherein the plurality of battery cells are arranged in the first direction, and/or wherein the second cover resin layer is formed by curing a fifth application line and a sixth application line consecutively formed in the first direction with the opening in the second cover layer therebetween, optionally wherein the fifth application line is formed on a first application line and a second application line formed with one of the pair of first openings therebetween, and the sixth application line is formed on a third application line and a fourth application line formed with another of the pair of first openings therebetween.

14. The battery pack of claim 12 or 13, wherein the second opening is formed at a position corresponding to vent portions of the plurality of the battery cells.

15. The battery pack of claim 12, when dependent on claim 9, wherein the opening, G3, in the second cover resin layer is formed at a position corresponding to the second opening.

16. The battery pack of claim 2, wherein the bus bar comprises a plurality of bus bars extending in a first direction in which the plurality of battery cells are arranged, and
the first and second cover resin layers are connected to each other through spaces between the bus bars.
